# EUROPEAN PATENT APPLICATION

(11) **EP 4 283 009 A1**
(43) Date of publication of application: **29.11.2023**
(21) Application number: 21925436.4
(22) Date of filing: 02.11.2021
(51) Int. Cl.: C22C 38/10, C22C 38/08, C22C 38/12, C22C 38/04, C22C 38/02, B22F 3/22, B22F 3/24, H04M 1/18, H04M 1/02

(54) **STEEL MATERIAL, STEEL STRUCTURAL MEMBER AND PREPARATION METHOD THEREFOR, AND TERMINAL**

(30) Priority: 10.02.2021 CN 202110181593
(71) Applicant: Huawei Technologies Co., Ltd., Shenzhen, Guangdong 518129 (CN); Zoltrixmaterial (Guangzhou) Limited, Guangzhou, Guangdong 511470 (CN)
(72) Inventor: YUAN, Wei, Shenzhen, Guangdong 518129 (CN); CAI, Ming, Shenzhen, Guangdong 518129 (CN); XU, Xiaoming, Shenzhen, Guangdong 518129 (CN); HUANG, Jiahao, Guangzhou, Guangdong 511470 (CN); ZHONG, Wenxiang, Guangzhou, Guangdong 511470 (CN)
(74) Representative: Körber, Martin Hans
(86) International application number: PCT/CN2021/128123
(87) International publication number: WO 2022/170789

(57) **Abstract**

A steel material, a steel mechanical part, and a preparation method of the steel mechanical part are disclosed. The steel material includes components in the following mass percentages: 14% to 20% of nickel, 7.5% to 11% of cobalt, 4% to 7% of molybdenum, 0.05% to 0.5% of rhenium and/or a rare earth element, less than or equal to 0.2% of manganese, less than or equal to 0.2% of silicon, less than or equal to 0.1% of carbon, less than or equal to 0.3% of oxygen, iron, and inevitable impurities. The steel mechanical part is made of the steel material. The preparation method includes: mixing alloy powder and a binder to prepare feed particles; performing injection molding on the feed particles to obtain an injection green billet of the steel mechanical part; performing debinding and sintering on the injection green billet in sequence to obtain a sintered blank; and performing heat treatment on the sintered blank to obtain the steel mechanical part.

## Description

This application claims priority to Chinese Patent Application No. 202110181593.6, filed with the China National Intellectual Property Administration on February 10, 2021 and entitled "STEEL MATERIAL, STEEL MECHANICAL PART AND PREPARATION METHOD THEREOF, AND TERMINAL", which is incorporated herein by reference in its entirety.

### TECHNICAL FIELD

This application relates to the field of materials, and specifically, to a steel material, a steel mechanical part and a preparation method thereof, and a terminal.

### BACKGROUND

Currently, a large quantity of steel mechanical parts are used in terminal products such as a mobile phone, a tablet, and a notebook computer, especially for a force-bearing part, for example, a rotating shaft assembly in a foldable mobile phone. Among the steel mechanical parts, a steel mechanical part with a small volume and a complex structure is especially suitable for being processed by using an injection molding technology. However, strength of an existing steel mechanical part formed through injection molding is limited. When a terminal product falls from a high location, the steel mechanical part is prone to a fracture. As a result, quality reliability of the terminal is affected. Therefore, it is necessary to provide a steel material and a steel mechanical part that have both high strength and high toughness.

### SUMMARY

In view of this, an embodiment of this application provides a steel material. The steel material has both high yield strength and high elongation. A steel mechanical part can be obtained through one-step molding. In this way, reliability of a terminal product using the steel mechanical part is improved.

Specifically, a first aspect of this embodiment of this application provides a steel material. The steel material includes components in the following mass percentages:
14% to 20% of nickel,
7.5% to 11% of cobalt,
4% to 7% of molybdenum,
0.05% to 0.5% of rhenium and/or a rare earth element,
less than or equal to 0.2% of manganese,
less than or equal to 0.2% of silicon,
less than or equal to 0.1% of carbon,
less than or equal to 0.3% of oxygen, iron, and inevitable impurities.

According to the steel material provided in this embodiment of this application, toughness of the steel material is improved by controlling a content of nickel, introducing rhenium and/or a rare earth element, and the like, and strength of the steel material is improved by further using cobalt, molybdenum, and the like. Various properties of the steel material are balanced through collaboration of the elements. Therefore, the steel material can have mechanical properties such as high strength and good toughness, and may be prepared through an injection molding process. In this way, a fracture resistance capability and a drop resistance capability of a mechanical part made of the steel material are improved, and volume miniaturization is ensured, thereby helping improving quality reliability of a terminal product.

In some implementations of this application, a mass percentage of nickel is 14% to 18%. By using a high content of nickel in a proper range, it can be ensured that the steel material has more strong and hard martensite structures after heat treatment, and a cleavage fracture resistance capability of the martensite structures can be obviously improved, thereby better balancing high strength and high toughness.

In some implementations of this application, a mass percentage of cobalt is 8% to 11%. An appropriate amount of cobalt can promote precipitation of a molybdenum-containing intermetallic compound in the steel material. In addition, strength of steel is enhanced, while the strength is not reduced due to an excessively small quantity of martensite structures in the steel.

In some implementations of this application, a mass percentage of molybdenum is 4.5% to 6.5%. An appropriate amount of molybdenum can promote formation of a strengthening phase in the steel material without reducing the toughness of the steel material.

In some implementations of this application, a mass percentage of rhenium and/or the rare earth element is 0.05% to 0.25%. Due to addition of an appropriate amount of rhenium and/or the rare earth element, a grain size of the steel material may be refined, thereby further improving the toughness of the steel material.

In some implementations of this application, a mass percentage of manganese is 0.01% to 0.2%.

In some implementations of this application, a mass percentage of silicon is 0.01% to 0.2%. By using an appropriate amount of manganese and an appropriate amount of silicon, oxygen and sulfur in preparation of the steel material can be reduced, while the toughness of the steel material is not reduced.

In some implementations of this application, a mass percentage of carbon may be 0.001% to 0.02%. By using a relatively low content of carbon, the strength of the steel material can be improved to some extent, while the toughness of the steel material is not damaged and difficulty of injection molding is not increased.

In an implementation of this application, the steel material is maraging steel. A structure of the maraging steel includes Fe-Ni martensite and an intermetallic compound. The intermetallic compound includes a Ni₃Mo phase and a molybdenum-rich phase. Due to existence of these structure phases, the maraging steel is enabled to have both high strength and high toughness.

In an implementation of this application, yield strength of the maraging steel is greater than or equal to 1500 MPa, and elongation of the maraging steel is greater than or equal to 3%.

According to the steel material provided in the first aspect of this embodiment of this application, a content of each element in the steel material is adjusted, so that the steel material can be prepared by using an injection molding technology. Therefore, the steel material has mechanical properties such as high strength and good toughness. The steel material is particularly applicable to molding of a small-sized mechanical part with a complex structure. Reliability of a terminal product can be improved when the steel material is used in the terminal product.

A second aspect of this embodiment of this application provides a steel mechanical part. The steel mechanical part includes the steel material described above. The steel mechanical part may be, for example, a terminal product mechanical part that has a relatively high strength requirement and a relatively high fracture resistance requirement, such as a rotating shaft component or a middle frame.

A material used by the steel mechanical part in this embodiment of this application includes the foregoing steel material. Therefore, the steel mechanical part may have both high strength and high toughness, and is not prone to a failure due to a fall in a use process of the steel mechanical part, thereby meeting a design requirement of a small-sized complex force-bearing mechanical part.

A third aspect of this embodiment of this application further provides a preparation method of a steel mechanical part, including:
mixing alloy powder and a binder to prepare feed particles, where the alloy powder includes components in the following mass percentages: 14% to 20% of nickel, 7.5% to 11% of cobalt, 4% to 7% of molybdenum, 0.05% to 0.5% of rhenium and/or a rare earth element, less than or equal to 0.2% of manganese, less than or equal to 0.2% of silicon, less than or equal to 0.1% of carbon, less than or equal to 0.3% of oxygen, iron, and inevitable impurities;
performing injection molding on the feed particles to obtain an injection green billet of the steel mechanical part;
performing debinding and sintering on the injection green billet in sequence to obtain a sintered blank; and
performing heat treatment on the sintered blank to obtain the steel mechanical part.

According to the preparation method of the steel mechanical part provided in the third aspect of this embodiment of this application, a process is simple, and a three-dimensional precision steel mechanical part with a complex structure can be obtained at a time. In addition, the preparation method is featured by high raw material utilization and low production costs, and helps large-scale production. The prepared steel mechanical part has excellent properties such as high strength and high toughness. The preparation method is especially suitable for preparation of a complex force-bearing mechanical part.

A fourth aspect of this embodiment of this application further provides a terminal. The terminal includes the steel mechanical part according to the second aspect of the embodiment of this application, or the steel mechanical part prepared by using the preparation method according to the third aspect of the embodiment of this application. The terminal has high quality reliability and a long service life.

In some implementations of this application, the terminal further includes a flexible display and a folding apparatus configured to carry the flexible display. The folding apparatus is configured to drive the flexible display to deform. The folding apparatus includes the steel mechanical part. The foregoing steel mechanical part is used in the folding apparatus in the terminal, to reduce a risk that the steel mechanical part in the terminal fractures after falling from a high location, thereby avoiding a phenomenon that image display performed by the flexible display is affected due to the fracture of the steel mechanical part. In addition, a risk of the folding apparatus getting stuck is avoided or reduced, so that quality of the terminal is improved. In addition, strength of the steel mechanical part is relatively high, and a thickness of the steel mechanical part does not need to be increased to ensure reliability of the steel mechanical part. This helps miniaturization of the folding apparatus, and further helps miniaturization of the terminal.

### BRIEF DESCRIPTION OF DRAWINGS

FIG. 1 is a schematic diagram of a structure of a terminal in a state according to an embodiment of this application;
FIG. 2 is a schematic diagram of a structure of a terminal in another state according to an embodiment of this application; and
FIG. 3 is a schematic flowchart of a preparation method of a steel mechanical part according to an embodiment of this application.

### DESCRIPTION OF EMBODIMENTS

The following describes the technical solutions of this application in detail.

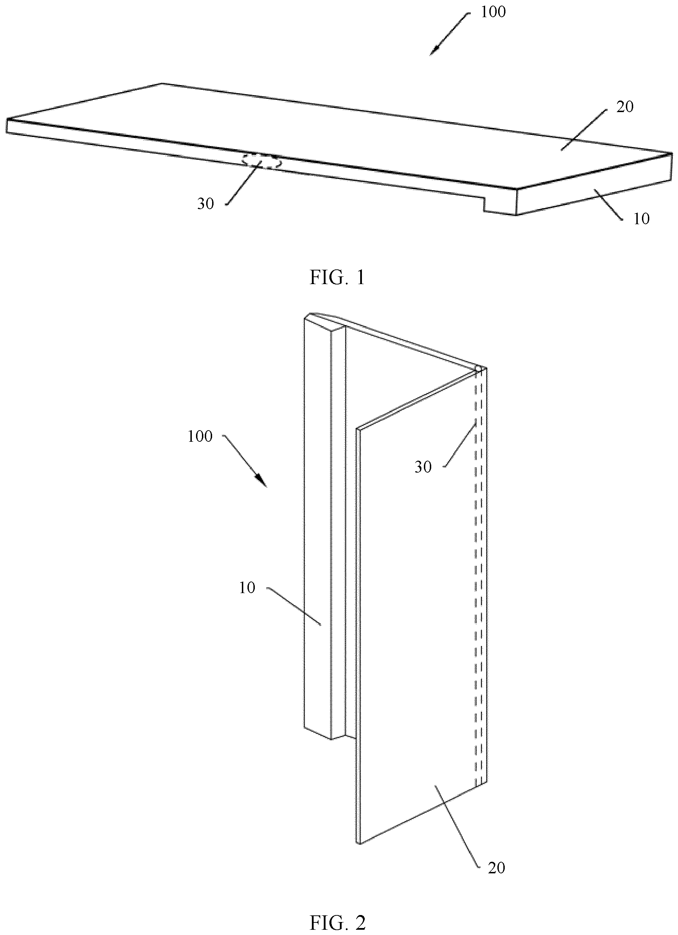

FIG. 1 is a schematic diagram of a structure of a terminal 100 in a state according to an embodiment of this application. The terminal 100 may be an electronic device such as a mobile phone, a tablet computer, a notebook computer, a wearable device, an e-reader, an in-vehicle device, a medical apparatus, or a piece of electronic newspaper that can be curled and folded. In this embodiment of this application, an example in which the terminal 100 is a mobile phone is used for description.

As shown in FIG. 1, in some embodiments, the terminal 100 includes a housing 10, a flexible display 20, and a folding apparatus 30. The folding apparatus 30 is mounted on the housing 10. The flexible display 20 is configured to display an image. The folding apparatus 30 is configured to drive the flexible display 20 to deform. For example, the folding apparatus 30 is connected to the flexible display 20, and is configured to drive the flexible display 20 to fold or unfold. The folding apparatus 30 includes a rotating shaft. The rotating shaft can rotate under driving force, to drive the flexible display 20 to bend.

Types of the flexible display 20 and the folding apparatus 30 are not limited in this application. A person skilled in the art can select the types of the flexible display 20 and the folding apparatus 30 according to an actual requirement. The flexible display 20 is made of a soft material, and is a deformable and bendable panel with a display function. Shapes and thicknesses of the flexible display 20 and the folding apparatus 30 in FIG. 1 are merely examples. This is not limited in this application.

Refer to both FIG. 1 and FIG. 2. FIG. 2 is a schematic diagram of a structure of the terminal 100 in another state according to an embodiment of this application. Under the driving force, the folding apparatus 30 can rotate, to drive the flexible display 20 to bend or unfold. As shown in FIG. 1, in a state, the terminal 100 is in an unfold state. In this case, the flexible display 20 is located on a same plane. As shown in FIG. 2, in another state, the terminal 100 is in a folded state. In this case, a part of a structure of the flexible display 20 and the other part of the structure of the flexible display 20 are located on different planes. The terminal 100 provided in this application can be correspondingly folded or unfolded based on different usage scenarios. The terminal 100 is presented in different forms, to meet different requirements of a user.

The folding apparatus 30 includes a steel mechanical part. The steel mechanical part is a mechanical part having a specific appearance and a specific shape. For example, the steel mechanical part may be, but is not limited to, a rotating shaft component in the folding apparatus 30. Specifically, the rotating shaft component may be at least one of complex force-bearing mechanical parts such as a main outer shaft, a connecting rod, an arc arm, a middle swing arm, a gear, a sliding block, and a sliding slot. The steel mechanical part has specific strength, to ensure mechanical strength of the folding apparatus 30 and avoid deformation of the folding apparatus 30 due to force, thereby ensuring reliability of the terminal 100.

A steel mechanical part in some folding apparatuses is prone to deformation or even has a risk of a fracture under great force. As a result, the folding apparatus gets stuck, and the terminal cannot implement free switching between folding and unfolding. In addition, the fractured steel mechanical part may stand against the flexible display screen, and affect image display performed by the flexible display screen, thereby affecting quality of the terminal. For example, a material used by the steel mechanical part in some folding apparatuses is 17-4PH or 420w that can be used for injection molding. The material has insufficient strength and poor toughness. When a terminal using the material falls from a high location, the steel mechanical part in the folding apparatus is prone to a fracture, thereby affecting a service life of the terminal.

In consideration of a risk of the fracture of the steel mechanical part in some terminals, this application provides the steel mechanical part. The steel mechanical part includes the following steel material with relatively high strength and relatively high elongation, to reduce a risk of a failure of the steel mechanical part due to a fracture in a falling process of the terminal 100. In addition, the steel mechanical part provided in this embodiment of this application has relatively high strength, and a thickness of the steel mechanical part does not need to be increased to ensure reliability of the steel mechanical part. This helps miniaturization of the steel mechanical part, and further helps miniaturization of the terminal 100. A material used by the steel mechanical part includes the following steel material. A part or all of the steel mechanical part may be made of the steel material. In particular, the steel material may be specifically maraging steel. The steel mechanical part may be formed by using a melting and casting process, or may be obtained through injection molding performed on corresponding alloy powder. This is not limited in this application. In particular, the following steel material is particularly suitable for forming a steel mechanical part through an injection molding process. To be specific, a three-dimensional precision component with a complex structure may be obtained through one-time molding, thereby implementing high processing efficiency and low costs.

The steel material in this embodiment of this application includes components in the following mass percentages:
14% to 20% of nickel,
7.5% to 11% of cobalt,
4% to 7% of molybdenum,
0.05% to 0.5% of rhenium and/or a rare earth element,
less than or equal to 0.2% of manganese,
less than or equal to 0.2% of silicon,
less than or equal to 0.1% of carbon,
less than or equal to 0.3% of oxygen, iron, and inevitable impurities.

In this embodiment of this application, the components of the steel material are determined by comprehensively considering contributions of chemical elements to overall property indexes (including strength, toughness, stability, and the like) of the steel material. Various properties are balanced through collaboration of the elements with the specific contents, so that the steel material with excellent overall properties is obtained.

Nickel (Ni) is an important toughening element in steel. When a content of the element Ni is greater than or equal to 14%, a cleavage fracture resistance capability of martensite structures formed after heat treatment of the steel material can be obviously improved, thereby ensuring relatively high toughness of the steel material. However, if the content of the Ni element is excessively high, a degree of transformation of the steel material from austenite to a martensite structure during heat treatment is reduced, and a relatively large amount of austenite with relatively low hardness is left. As a result, hardness of the steel material is reduced. Therefore, in this embodiment of this application, the content of Ni is controlled to be 14% to 20%, for example, may be 14%, 15%, 16%, 17%, 18%, 19%, or 20%. In some embodiments, a mass percentage of nickel is 14% to 18%, so that the steel material better balances properties such as good toughness and high strength.

The element cobalt (Co) can promote precipitation of a molybdenum-containing intermetallic compound, and improve strength of steel. In addition, by using Co, stability of martensite can be improved, and recovery of a dislocation substructure of martensite can be delayed, thereby ensuring high dislocation density of lath martensite. However, if the content of Co is excessively high, a relatively large amount of highly stable austenite is formed in the steel material, and smooth transformation from austenite to a martensite structure cannot be implemented in a heat treatment process, thereby hindering the steel material from obtaining high strength. In this embodiment of this application, a mass percentage of Co is controlled to be 7.5% to 11%, for example, may be 8%, 8.5%, 9%, 9.5%, 10%, 10.5%, or 11%. In some embodiments, the mass percentage of Co is 8% to 11%.

The element molybdenum (Mo) can promote formation of a strengthening phase in the foregoing steel material, such as a Laves phase or molybdenum carbide, thereby increasing strength of the steel material. In addition, Mo is a ferrite stabilized element. An excessively high content of Mo leads to precipitation of excessive brittle phases along a grain boundary during solution treatment, thereby greatly reducing toughness of the steel material. In this embodiment of this application, a mass percentage of Mo is controlled to be 4% to 7%, for example, may be 4.5%, 5%, 5.5%, 6%, 6.5%, or 7%. In some embodiments, the mass percentage of Mo is 4.5% to 6.5%.

The element rhenium (Re) and the rare earth element may have functions of purifying the grain boundary and refining grains, thereby improving the strength and the toughness of the steel material and improving density of the steel material in a sintering process. The element rhenium may be added alone, or the rare earth element may be added alone. Alternatively, both the element rhenium and the rare earth element may be added. The rare earth element may include lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutecium (Lu), and one or more of yttrium (Y) and scandium (Sc). In some implementations, the rare earth element includes one or more of La, Ce, Pr, Nd, Sm, Gd, Tb, Dy, Er, Yb, Y, and the like. For example, the rare earth element may include at least two of La, Ce, Nd, Y, and the like.

In an implementation of this application, a mass percentage of rhenium and/or the rare earth element may be 0.05% to 0.5%. Specifically, the mass percentage of rhenium and/or the rare earth element may be 0.06%, 0.07%, 0.08%, 0.09%, 0.1%, 0.15%, 0.2%, 0.3%, 0.35%, 0.45%, 0.48%, or the like. In some embodiments, the mass percentage of rhenium and/or the rare earth element may be 0.05% to 0.25%. In other embodiments, the mass percentage of rhenium and/or the rare earth element may be 0.06% to 0.3%. In some implementations of this application, the foregoing steel material includes both the element rhenium and the rare earth element. For example, a mass ratio of the element pyridine to the rare earth element may be (0.5-3):1.

In a process of preparing alloy powder for injection molding, an element silicon (Si) may be used as a deoxidant for molten liquid steel, and may also be used to increase fluidity of the liquid steel. In addition, a small amount of Si may exist in the steel mechanical part after the injection molding in an oxide inclusion form, to improve strength of the steel mechanical part. However, when a content of Si is excessively high, toughness of steel is reduced. In some implementations of this application, the content of Si may be a trace to 0.2%. In chemistry, the trace means a content being one millionth or less in a substance. It may be understood that in chemistry, the trace means a very small content of a component in a substance. In this embodiment of this application, a content lower limit of the element Si may be not limited. In some embodiments, a mass percentage of Si may be 0.01% to 0.2%, for example, specifically 0.02%, 0.03%, 0.05%, 0.08%, 0.1%, 0.12%, 0.15%, 0.18, or 0.2%. In some other embodiments, the mass percentage of Si may be 0.05% to 0.15%.

An element manganese (Mn) has effect of deoxidization and desulfurization in the steel material. In the process of preparing the alloy powder for injection molding, oxygen and sulfur in alloy molten liquid may be removed. In addition, the element manganese (Mn) is also an element for ensuring hardenability. The element manganese has a similar function as the element Si. When a content of Mn is excessively high, the toughness of the steel material is significantly reduced. In some implementations of this application, the content of Mn may be a trace to 0.2%. In some embodiments, a mass percentage of Mn may be 0.01% to 0.2%, for example, specifically 0.02%, 0.03%, 0.05%, 0.08%, 0.1%, 0.12%, 0.15%, 0.18, or 0.2%. In some other embodiments, the mass percentage of Mn may be 0.05% to 0.15%.

An element carbon (C) is one of common elements in the steel material. In a Ni-Co-Mo maraging steel system, existence of an appropriate amount of the element C may help forming a molybdenum-containing carbide, thereby improving the strength and wear resistance of steel. However, excessive C leads to an excessively large volume fraction of the molybdenum-containing carbide, thereby greatly reducing a content of a molybdenum-containing intermetallic compound and further greatly reducing the strength of the maraging steel. In addition, brittleness is increased, and the toughness of the maraging steel is damaged. In addition, when the content of C is excessively high, it is more difficult to accurately control the content of carbon during injection molding, thereby affecting properties and stability of the prepared steel material. Therefore, in an implementation of this application, the content of C may be controlled to be a trace to 0.1%. In some implementations, a mass percentage of C may be 0.001% to 0.02%. In some embodiments, the mass percentage of C may be 0.001% to 0.01%.

It is easy for the element oxygen (O) to form an inclusion in steel. By using a small quantity of oxide inclusions in a dispersion state, the strength of the steel material may be increased. However, when the element oxygen is excessive, plasticity, toughness, and strength of the steel material are reduced. When the foregoing steel mechanical part is prepared through an injection molding process, a content of O may be strictly controlled in processes such as alloy powder preparation and green billet sintering. In an implementation of this application, the content of O may be controlled to be a trace to 0.3%. In some implementations, a mass percentage of O may be 0.01% to 0.3%.

In an implementation of this application, the steel material does not include an element titanium (Ti) or an element aluminum (Al). This helps improve sintering density in an injection molding process and batch stability of the obtained steel mechanical part. Although the elements Ti and Al may be used as strengthening elements in the steel material to form an intermetallic compound strengthening phase, the elements are prone to oxidization in the injection molding process. It is not suitable to use the injection molding process to produce a steel material containing Ti and/or Al. It is difficult to produce a compact small-sized component with a complex structure.

The element iron (Fe) is a necessary element in the steel material, and participates in formation of a martensite phase.

An increase of an impurity element leads to reduction of the properties of the steel material. Therefore, in this embodiment of this application, a total content of the inevitable impurity element is controlled to be less than or equal to 0.3%. The impurity element includes but is not limited to one or more of sulfur (S), phosphorus (P), nitrogen (N), hydrogen (H), boron (B), copper (Cu), chromium (Cr), tungsten (W), vanadium (V), zirconium (Zr), calcium (Ca), magnesium (Mg), zinc (Zn), neodymium (Nb), tantalum (Ta), and the like.

In some implementations of this application, the foregoing steel material is maraging steel. A structure of the maraging steel includes Fe-Ni martensite and an intermetallic compound. The intermetallic compound includes a Ni₃Mo phase and a molybdenum-rich phase. Due to existence of these structure phases, the maraging steel is enabled to have both high strength and high toughness, and is not prone to deformation or a fracture under high-strength force. The foregoing phases mean uniform and continuous components having a same chemical component, a same atomic aggregation status, and a same property. Different phases are separated by an interface. The foregoing intermetallic compound means a compound made of metal and metal or of metal and metalloid. The intermetallic compound is distributed at a location of a grain boundary or precipitated in the foregoing Fe-Ni martensite matrix phase, and may have a relatively obvious strengthening function as a second phase. In addition to a contribution to the strength of steel, the Fe-Ni martensite further mainly contributes to toughness.

In some implementations of this application, the structure of the maraging steel may further include one or more of austenite, a Fe₂Mo-type Laves phase, and a metal carbide (for example, an M₂C-type metal carbide). Due to existence of austenite, the maraging steel may be toughened to some extent. The Fe₂Mo-type Laves phase is also one type of intermetallic compound. Both the Fe₂Mo-type Laves phase and the M₂C-type metal carbide may have a specific strengthening function. The Laves phase is a close-packed cubic or hexagonal intermetallic compound with a chemical formula mainly in an AB₂ type.

In an implementation of this application, yield strength of the maraging steel is greater than or equal to 1500 MPa, and elongation of the maraging steel is greater than or equal to 3%. In this embodiment of this application, the contents of Ni, Co, Mo, Re, and/or the rare earth element are regulated, so that the maraging steel can be prepared through the injection molding process and have both high yield strength and high elongation. In this way, a complex three-dimensional precision component can be formed at a time. Therefore, a risk of a failure of the steel mechanical part due to a fracture in a falling process of a terminal using the steel can be reduced. In addition, the yield strength of the maraging steel is relatively high, and a thickness of the steel mechanical part using the steel does not need to be increased to ensure reliability of the steel mechanical part. This helps miniaturization of the steel mechanical part, and further helps miniaturization and lightweight of the terminal.

The yield strength is a yield limit when a yield phenomenon occurs on a metal material, namely, stress that resists microplastic deformation. For a metal material on which no apparent yield phenomenon occurs, it is specified that a stress value corresponding to residual deformation of 0.2% is used as a yield limit of the metal material, and is referred to as a conditional yield limit or yield strength. The elongation means an index for describing a plastic property of a material, and is a percentage of a ratio of total deformation ΔL of a gauge length section to an original gauge length L after a tensile fracture of a sample. In some implementations of this application, the yield strength of the maraging steel is greater than or equal to 1510 MPa. In some embodiments, the yield strength of the maraging steel is 1500 MPa to 1650 MPa. The yield strength may be specifically 1510 MPa, 1530 MPa, 1550 MPa, 1580 MPa, 1600 MPa, 1620 MPa, or the like. In some implementations of this application, the elongation of the maraging steel is greater than or equal to 3.5%. In some embodiments, the elongation of the maraging steel is 3.5% to 5%, for example, may be 3.6%, 3.8%, 4.0%, 4.1%, 4.2%, 4.3%, 4.5%, 4.6%, 4.7%, 4.8%, or 4.9%.

According to the foregoing steel material provided in this embodiment of this application, the toughness of the steel material is improved by controlling the content of Ni to be in a relatively high range, introducing Re and/or the rare earth element, and the like, and the strength of the steel material is improved by further using Co, Mo, and the like. A formula of the elements in the steel material is optimized, and various properties of the steel material are balanced through collaboration of the elements. Therefore, the steel material is enabled to balance mechanical properties such as high strength and good toughness, and may be prepared through the injection molding process.

When the material used by the steel mechanical part in the terminal 100 includes the foregoing steel material, the steel mechanical part may have both high strength and high toughness, and is not prone to deformation or a fracture under high-strength force, thereby improving a fracture resistance capability, a drop deformation resistance capability, and the like of the steel mechanical part. A thickness of the steel mechanical part does not need to be increased to further ensure reliability of the steel mechanical part. This helps miniaturization and lightweight of the steel mechanical part. In addition, the steel mechanical part may be prepared through the injection molding process. The steel mechanical part may have a relatively complex structure and a relatively small volume, to further help miniaturization of a terminal product using the steel mechanical part. In particular, when the steel mechanical part is used in the folding apparatus 30 in the terminal, a risk that the steel mechanical part in the terminal fractures after falling from a high location is reduced. For example, a falling height may be increased to 1.5 m. In this way, a phenomenon that image display performed by the flexible display is affected due to the fracture of the steel mechanical part. In addition, a risk of the folding apparatus getting stuck is avoided or reduced, so that quality of the terminal 100 is improved.

It should be noted that, in the foregoing embodiments of this application, although the steel mechanical part is described as the folding apparatus 30 of the terminal 100, in another embodiment, the steel mechanical part may be alternatively another force-bearing mechanical part in the terminal. For example, the steel mechanical part may be alternatively a middle frame and/or a rear cover of the terminal 100. This is not limited in this application. For example, the steel mechanical part is the middle frame of the terminal 100. Because the steel mechanical part has relatively high yield strength and is not prone to deformation, when the terminal 100 falls from a high location, the middle frame of the terminal 100 is not prone to deformation. In this way, a risk of deformation of an appearance of the terminal 100 is reduced, to help ensure a beautiful appearance of the terminal 100.

An embodiment of this application further provides a preparation method of a steel mechanical part. It should be noted that the steel mechanical part may be obtained by using the preparation method of the steel mechanical part provided in this application, or may be obtained by using another preparation method, for example, a melting and casting method. The preparation method of the steel mechanical part provided in this application includes but is not limited to preparation of the foregoing steel mechanical part.

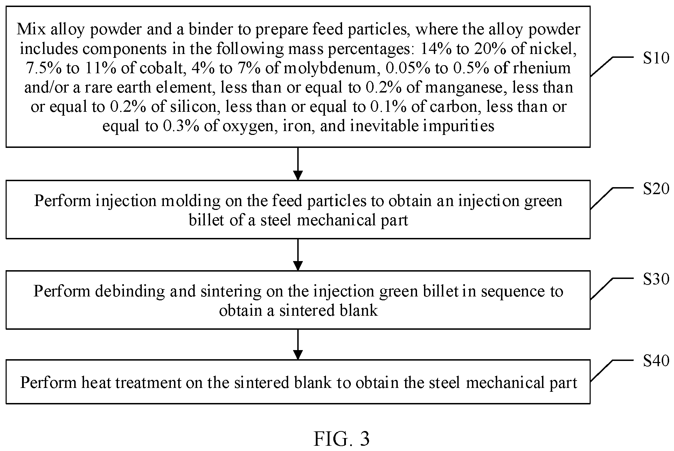

Specifically, with reference to FIG. 3, the preparation method of the steel mechanical part provided in an embodiment of this application includes the following steps:
S10: Mix alloy powder and a binder to prepare feed particles. The alloy powder includes components in the following mass percentages: 14% to 20% of nickel, 7.5% to 11% of cobalt, 4% to 7% of molybdenum, 0.05% to 0.5% of rhenium and/or a rare earth element, less than or equal to 0.2% of manganese, less than or equal to 0.2% of silicon, less than or equal to 0.1% of carbon, less than or equal to 0.3% of oxygen, iron, and inevitable impurities.
S20: Perform injection molding on the feed particles to obtain an injection green billet of the steel mechanical part.
S30: Perform debinding and sintering on the injection green billet in sequence to obtain a sintered blank.
S40: Perform heat treatment on the sintered blank to obtain the steel mechanical part.

In this embodiment of this application, the injection green billet of the steel mechanical part is formed by using the feed particles of the alloy powder and the binder in an injection molding manner. For example, the injection green billet of the steel mechanical part is formed through metal injection molding (Metal injection molding, MIM), thereby implementing high molding efficiency and low costs. In addition, an injection green billet of a three-dimensional complex precision steel mechanical part can be effectively obtained at a time, thereby improving production efficiency of preparing a complex precision steel mechanical part.

In some implementations, in step S10, alloy powder having a specific granularity requirement may be prepared in an atomization manner. Certainly, in another implementation of this application, the alloy powder may be alternatively obtained by using a wet chemical reduction method, a mechanical method, or the like. The atomization method is a method in which each raw material is weighed and taken based on a component ratio in pre-prepared maraging steel, each raw material is melted into an alloy molten liquid, then the alloy molten liquid is crushed into fine droplets by using an atomization medium with a specific speed, and then powder is obtained through fast cooling. The atomization medium may be a high-speed gas such as air, nitrogen, or argon, or a high-speed water flow, or the like.

In an implementation of this application, D 10 of the alloy powder may be less than or equal to 4.5 µm, and D90 of the alloy powder is less than or equal to 30 µm. The injection green billet of the steel mechanical part can be more easily obtained through injection molding by using alloy powder with an appropriate particle size. The injection green billet is of good quality. In a sintering process, a surface of the green billet is not prone to bubbles or cracks. Further, D50 of the alloy powder may be within a range of 5 µm to 15 µm.

As described above, in the preparation process of the alloy powder, silicon may be used as a deoxidant of the alloy molten liquid, and may be further used to increase fluidity of the alloy molten liquid; and the element manganese may be used to remove oxygen and sulfur from the liquid steel. In an implementation of this application, a content of silicon or manganese in the alloy powder is controlled to be a trace to 0.2%, for example, 0.01% to 0.2%. A function, a mass percentage, and the like of each element in the alloy powder are as described in any one of the foregoing implementations in this specification. Details are not described herein again.

The binder is added to the alloy powder, so that formed paste-like feed has specific fluidity, thereby improving an injection molding property of the feed. A mold cavity with a complex shape can be well filled under pressure, thereby avoiding defects such as a crack or a broken corner in the injection green billet. In addition, the binder may be added to enable the injection green billet to have specific strength after the injection molding and maintain a shape after being detached from the mold cavity, thereby reducing or avoiding deformation of the injection green billet and improving a yield rate of the prepared steel mechanical part.

In some implementations, the feed particles in step S10 may be prepared by using the following method: adding the alloy powder and the binder, and mixing the alloy powder and the binder in an internal mixer to obtain paste-like feed; and granulating the paste-like feed to form the feed particles.

The mixing of the alloy powder and the binder is completed under combined effect of thermal effect and shear force, so that the binder can effectively wrap alloy powder particles. In addition, there is enough binder for lubrication between the particles. A ratio of the alloy powder to the binder and a mixing condition of the internal mixer are not limited in this application. A person skilled in the art can select a ratio of the steel powder to the binder and a mixing condition of the internal mixer according to an actual requirement. For example, the alloy powder and the binder are mixed at a volume ratio of 65:35. Mixing parameters of a mixture in the internal mixer are as follows: temperature: 150°C to 250°C; time: 0.5 h to 1.5 h; and blade rotating speed: 10 r/min to 20 r/min.

The binder may include one or more of polyformaldehyde (polyformaldehyde, POM), ethylene vinyl acetate (ethylene vinyl acetate, EVA) copolymer, polyethylene (polyethylene, PE), polypropylene (PP), ceresin wax (ceresin wax, CW), stearic acid (stearic acid, SA), and the like. In some embodiments, weight percentages of the components in the binder are as follows: POM: 70%-85%, PP: 8%-20%, CW: 1%-5%, and SA: 0.5%-5%. For example, POM:PP:CW:SA = 80%:15%:3%:2%. A specific content of each component in the binder is not limited in this application.

The paste-like feed may be granulated by a granulator to form the feed particles. For example, after the paste-like feed is moved into the granulator, a screw of the granulator extrudes the gradually cooled paste-like feed through a die head, and a rotating blade cuts the strip feed into cylindrical particles with a length of 2 mm to 4 mm, to obtain the feed particles that can be directly used for molding.

"Perform injection molding on the feed particles to obtain an injection green billet of the steel mechanical part" in step S20 may specifically include: adding the feed particles into a hopper of an injection molding machine, ejecting the feed particles from the injection molding machine under a specific temperature and pressure condition, and filling the feed particles into a cavity of a mold, to obtain the injection green billet of the steel mechanical part. For example, an ejection temperature (namely, an injection temperature) of the injection molding machine is 170°C to 225°C, and pressure is 150 MPa to 200 MPa.

In some implementations, in step S30, the binder in the foregoing injection green billet is removed in a catalytic debinding manner. The catalytic debinding for removing the binder is to debind the green billet of steel mechanical part in a specific atmosphere based on a characteristic that a polymer can be fast degraded in the atmosphere, thereby decomposing the binder to remove the binder. Based on the debinding manner, debinding can be fast performed without defects, and debinding efficiency can be further increased, thereby improving preparation efficiency of the steel mechanical part. It may be understood that the binder has features of enhancing the fluidity to facilitate injection molding and maintenance of the shape of the billet, and further has features such as easy removal, non-pollution, non-toxicity, and appropriate costs, to facilitate a debinding removal process.

In some embodiments, the injection green billet of the steel mechanical part is placed on an aluminum oxide ceramic board, and is placed in a catalytic debinding furnace for catalytic debinding under a specific condition. Parameters such as a debinding time, a debinding temperature, and a debinding atmosphere are not limited in this application. A person skilled in the art can select a debinding condition according to an actual requirement. For example, a temperature of catalytic debinding is set to 100°C to 150°C, an inlet amount of fuming nitric acid is set to 0.5 g/min to 34 g/min, and a time is set to 2 h to 4 h.

Certainly, in another implementation of this application, another debinding manner may be alternatively used, for example, solvent debinding. This is not limited in this application.

In step S30, the sintered blank of the steel mechanical part may be formed by sintering the debound injection green billet. The sintering of the debound green billet needs to be performed in an atmosphere of a protective gas, for example, in argon, hydrogen, or vacuum, to avoid introducing oxygen, nitrogen, and other impurities during sintering in air.

In this embodiment of this application, the injection green billet of the steel mechanical part is sintered, to reduce or eliminate a hole in the injection green billet, thereby implementing densification for the injection green billet. In this way, the formed steel sintered blank can achieve full densification or near full densification, thereby enhancing the strength of the steel mechanical part. In addition, in this embodiment of this application, because the content of carbon in the alloy powder is relatively low, and is less than or equal to 0.1%, it is easy to control sintering parameters of the injection green billet of the steel mechanical part, thereby reducing a process difficulty in preparing the steel mechanical part. In addition, steel powder is strengthened without depending on active elements such as aluminum (Al) or titanium (Ti), and has a low content of carbon. For the steel mechanical part prepared through metal injection molding, the sintering process is easy to implement, stable to control, and easy for production.

In some embodiments, in the sintering process of the debound green billet, a content of oxygen or carbon in the finally prepared steel mechanical part is adjusted by controlling a sintering temperature, a sintering time, and pressure of a protective gas, so that the finally formed steel mechanical part has features such as high strength and high toughness. For example, the sintering temperature is 1300°C to 1400°C, and the sintering time is 4 h to 6 h.

In step S40, heat treatment is performed on the sintered blank of the steel mechanical part, to obtain a martensite structure and promote precipitation of a strengthening phase, so that the finally formed steel mechanical part achieves required mechanical properties. For example, the yield strength is greater than or equal to 1500 MPa, and the elongation is greater than or equal to 3%. For example, the heat treatment may sequentially include solution treatment and aging treatment. In a specific example, the heat treatment includes: first performing solution treatment at a temperature of 900°C to 1100°C for 2 h to 3 h, cooling to a room temperature through air cooling or oil cooling, performing aging treatment at a temperature of 450°C to 550°C for 3 h to 5 h, and cooling to the room temperature again.

As described above, the prepared steel mechanical part includes the foregoing maraging steel. The structure of the maraging steel includes Fe-Ni martensite and the intermetallic compound. The intermetallic compound includes the Ni₃Mo phase and the molybdenum-rich phase. The existence of these structure phases may enable the maraging steel to have both high strength and high toughness.

The preparation method of the steel mechanical part provided in this embodiment of this application has a simple process in which a three-dimensional precision steel mechanical part with a complex structure can be obtained at a time. Compared with a conventional melting and casting method, the preparation method is featured by high raw material utilization, and does not require precision machining on a formed part. For example, there is no need to process the formed part into a complex precision part by using a computer numerical control (computer numerical control, CNC) machine tool. In this way, production efficiency of preparing a complex precision steel mechanical part is improved, and costs of preparing the steel mechanical part are reduced. In addition, this helps large-scale production of the steel mechanical part. In addition, in a process of preparing the steel mechanical part according to this application, the contents of oxygen and carbon in the original alloy powder can be adjusted, and the contents of oxygen and carbon in the final steel mechanical part can be adjusted through the sintering process, to effectively control the content of oxygen or carbon in the finally prepared steel mechanical part, so that a content of each element in the obtained steel mechanical part is not greatly different from a mass of each element in the used alloy powder.

In addition, the prepared steel mechanical part has features that the yield strength is greater than or equal to 1500 MPa, and the elongation is greater than or equal to 3%. In other words, the formed steel mechanical part has features of both high strength and high toughness, so that the steel mechanical part is not prone to deformation or a fracture under high-strength force. The preparation method is especially suitable for molding of a force-bearing mechanical part.

The following further describes embodiments of this application by using a plurality of specific embodiments.

### Embodiment 1

Maraging steel includes components in the following mass percentages: 15.16% of Ni, 7.65% of Co, 4.89% of Mo, 0.44% of Re and a rare earth element (2:1), 0.13% of Mn, 0.05% of Si, 0.02% of C, 0.07% of O, and a balance of Fe and inevitable impurities.

A preparation method of the maraging steel includes the following steps:
(1) Preparation of alloy powder: Each raw material is weighed and taken based on a component ratio of pre-prepared maraging steel. Each raw material is melted into an alloy molten liquid. When flowing from a leaking hole, the alloy molten liquid is crushed into fine droplets by high-speed argon emitted from an atomizer nozzle, and then is fast cooled to obtain alloy powder. A particle size of the alloy powder meets the following conditions: D10 is less than or equal to 4 µm, and D90 is less than or equal to 30 µm. The alloy powder includes components in the following mass percentages: 15.3% of Ni, 7.9% of Co, 5.2% of Mo, 0.45% of Re and a rare earth element (2:1), 0.19% of Mn, 0.19% of Si, 0.08% of C, 0.14% of O, and a residue of Fe and inevitable impurities.
(2) Preparation of feed: The alloy powder in step (1) is mixed with a binder (components of the binder include POM, PP, CW, and SA with a weight ratio of 80:15:3:2) at a volume ratio of 65:35. Then, the mixture is added to an internal mixer for mixing (mixing parameters are as follows: blade rotation speed: 10 r/min to 20 r/min; temperature: 150°C to 250°C; and time: 0.5 h to 1.5 h) to obtain paste-like feed. The obtained paste-like feed is moved into a granulator. A screw of the granulator extrudes the gradually cooled feed through a die head to obtain the strip feed. A rotating blade cuts the strip feed into cylindrical particles with a length of 3 mm±0.5 mm, to obtain feed particles that can be directly used for injection molding.
(3) Injection molding: The feed particles obtained in step (2) are added to an injection molding machine. Injection molding is performed at an injection temperature of 175°C to 225°C and an injection pressure of 150 MPa to 200 MPa, to obtain a molded green billet.
(4) Debinding: The molded green billet obtained in step (3) is placed on an aluminum oxide ceramic board, and is placed in a catalytic debinding furnace for catalytic debinding, to obtain a debound green billet. Debinding parameters include: a temperature of 100°C to 150°C, an inlet amount of fuming nitric acid of 3.5 g/min, and a debinding time of 2 h to 3 h.
(5) Sintering: The debound green billet obtained in step (4) and the aluminum oxide ceramic board are put into a sintering furnace together, and are sintered for 4 h to 6 h at a temperature of 1300°C to 1400°C in a hydrogen atmosphere to obtain a sintered blank.
(6) Heat treatment: The sintered blank obtained in step (5) is placed in a heat treatment furnace. Solution treatment is first performed at a temperature of 900°C to 1100°C for 2 h to 3 h. Cooling to a room temperature is performed through oil cooling. Then, the temperature is raised to 450°C to 550°C. Heat preservation is performed for 3 h to 5 h to perform aging treatment. Finally, cooling to the room temperature is performed through oil cooling, to obtain the maraging steel, that is, obtain the required steel mechanical part.

### Embodiments 2-8

An alloy powder formula used for preparing each type of maraging steel and a specific formula of a prepared maraging steel mechanical part are shown in Table 1.

Table 1 summarizes contents of components in the alloy powder used for preparing the maraging steel or the steel mechanical part, and further summarizes contents of components in the prepared maraging steel and yield strength and elongation of the maraging steel.

**Table 1**

| Embodiment | | Components | | | | | | | | Properties | |
|---|---|---|---|---|---|---|---|---|---|---|---|
| | | Ni% | Co% | Mo% | Re and/or a rare earth element (%) | Si% | Mn% | C% | O% | Yield strength/ MPa | Elongation/ % |
| 1 | Alloy powder | 15.3 | 7.9 | 5.2 | 0.45 (Re:Rare earth element = 2:1) | 0.19 | 0.19 | 0.08 | 0.14 | / | / |
| | Steel mechanical part | 15.28 | 7.98 | 5.19 | 0.44 (Re:Rare earth element = 2:1) | 0.18 | 0.17 | 0.02 | 0.07 | 1550 | 4.3 |
| 2 | Alloy powder | 15.10 | 10.8 | 4.5 | 0.35 (Re) | 0.11 | 0.20 | 0.02 | 0.26 | / | / |
| | Steel mechanical part | 14.96 | 10.75 | 4.55 | 0.30 (Re) | 0.13 | 0.19 | 0.006 | 0.08 | 1565 | 4.67 |
| 3 | Alloy powder | 16.33 | 8.56 | 5.75 | 0.26 (Re) | 0.16 | 0.15 | 0.015 | 0.22 | / | / |
| | Steel mechanical part | 16.42 | 8.65 | 5.72 | 0.22 (Re) | 0.10 | 0.15 | 0.008 | 0.10 | 1554 | 4.0 |
| 4 | Alloy powder | 18.75 | 7.94 | 5.12 | 0.09 (Rare earth element) | 0.13 | 0.12 | 0.01 | 0.28 | / | / |
| | Steel mechanical part | 18.83 | 7.86 | 5.06 | 0.08 (Rare earth element) | 0.16 | 0.09 | 0.002 | 0.16 | 1510 | 4.5 |
| 5 | Alloy powder | 19.5 | 7.80 | 4.89 | 0.38 (Re:Rare earth element = 1:1) | 0.18 | 0.1 | 0.014 | 0.05 | / | / |
| | Steel mechanical part | 19.32 | 7.84 | 4.95 | 0.32 (Re:Rare earth element = 1:1) | 0.16 | 0.06 | 0.005 | 0.016 | 1530 | 3.94 |
| 6 | Alloy powder | 18.92 | 9.68 | 6.51 | 0.45 (Rare earth element) | 0.16 | 0.09 | 0.01 | 0.09 | / | / |
| | Steel mechanical part | 18.95 | 9.74 | 6.34 | 0.42 (Rare earth element) | 0.13 | 0.14 | 0.002 | 0.07 | 1615 | 4.1 |
| 7 | Alloy powder | 17.23 | 9.25 | 5.42 | 0.28 (Rare earth element) | 0.18 | 0.12 | 0.01 | 0.12 | / | / |
| | Steel mechanical part | 17.13 | 9.17 | 5.36 | 0.22 (Rare earth element) | 0.19 | 0.09 | 0.007 | 0.09 | 1574 | 3.6 |
| 8 | Alloy powder | 14.82 | 8.45 | 6.7 | 0.16 (Re) | 0.10 | 0.19 | 0.10 | 0.19 | / | / |
| | Steel mechanical part | 14.50 | 8.62 | 6.96 | 0.10 (Re) | 0.14 | 0.15 | 0.03 | 0.13 | 1546 | 3.6 |

Description of Table 1: Fe and an impurity element are not listed in the composition formulas of each type of alloy powder and each steel mechanical part in Table 1. When the content of each element listed in Table 1 is excluded, a remaining content in each type of alloy powder or each steel mechanical part is a sum of mass percentages of Fe and the impurity element. In addition, for Re and/or the rare earth element, some embodiments in Table 1 may include only Re, or may include only the rare earth element, or both Re and the rare earth element. The rare earth element may be one or more of La, Ce, and Y.

It may be learned from Table 1 that the mass percentage of each component in the maraging steel mechanical part obtained through the injection molding process is slightly different from the ratio of each component in the alloy powder for injection molding. This is mainly caused due to unavoidable fluctuation of the content of each element in the entire preparation process. In particular, due to a relatively low content of C in an alloy powder system, difficulty in controlling the content of each component in the injection molding process is low, thereby ensuring quality stability of each batch of steel mechanical parts. The mass percentages of components in the finally formed steel mechanical part still meet the foregoing ranges of this application: 14% to 20% of Ni, 7.5% to 11% of Co, 4% to 7% of Mo, 0.05% to 0.5% of Re and/or the rare earth element, less than or equal to 0.2% of Mn, less than or equal to 0.2% of Si, less than or equal to 0.1% of C, less than or equal to 0.3% of O, and Fe and inevitable impurities.

In addition, it may be learned from Table 1 that the yield strength of the steel mechanical part provided in this embodiment of this application is greater than or equal to 1500 Mpa, and the elongation is greater than or equal to 3%. In other words, the steel mechanical part has relatively high strength and good toughness, and is not prone to deformation or a fracture under high-strength force. This indicates that by using the steel material in this application, one-time molding of a complex mechanical part may be implemented by using an injection molding technology, so that a product has both relatively high strength and specific toughness. In addition, a problem that strength of a steel mechanical part that can be prepared through injection molding is insufficient under a specific toughness condition can be resolved.

## Claims

1. A steel material, wherein the steel material comprises components in the following mass percentages:
14% to 20% of nickel,
7.5% to 11% of cobalt,
4% to 7% of molybdenum,
0.05% to 0.5% of rhenium and/or a rare earth element,
less than or equal to 0.2% of manganese,
less than or equal to 0.2% of silicon,
less than or equal to 0.1% of carbon,
less than or equal to 0.3% of oxygen, iron, and inevitable impurities.

2. The steel material according to claim 1, wherein a mass percentage of nickel is 14% to 18%.

3. The steel material according to claim 1 or 2, wherein a mass percentage of cobalt is 8% to 11%.

4. The steel material according to any one of claims 1 to 3, wherein a mass percentage of molybdenum is 4.5% to 6.5%.

5. The steel material according to any one of claims 1 to 4, wherein a mass percentage of rhenium and/or the rare earth element is 0.05% to 0.25%.

6. The steel material according to any one of claims 1 to 5, wherein a mass percentage of manganese is 0.01% to 0.2%.

7. The steel material according to any one of claims 1 to 6, wherein a mass percentage of silicon is 0.01% to 0.2%.

8. The steel material according to any one of claims 1 to 7, wherein a mass percentage of carbon may be 0.001% to 0.02%.

9. The steel material according to any one of claims 1 to 8, wherein the steel material is maraging steel, a structure of the maraging steel comprises Fe-Ni martensite and an intermetallic compound, and the intermetallic compound comprises a Ni₃Mo phase and a molybdenum-rich phase.

10. The steel material according to claim 9, wherein yield strength of the maraging steel is greater than or equal to 1500 MPa, and elongation of the maraging steel is greater than or equal to 3%.

11. A steel mechanical part, wherein the steel mechanical part comprises the steel material according to any one of claims 1 to 10.

12. A preparation method of a steel mechanical part, comprising the following steps:
mixing alloy powder and a binder to prepare feed particles, wherein the alloy powder comprises components in the following mass percentages: 14% to 20% of nickel, 7.5% to 11% of cobalt, 4% to 7% of molybdenum, 0.05% to 0.5% of rhenium and/or a rare earth element, less than or equal to 0.2% of manganese, less than or equal to 0.2% of silicon, less than or equal to 0.1% of carbon, less than or equal to 0.3% of oxygen, iron, and inevitable impurities;
performing injection molding on the feed particles to obtain an injection green billet of the steel mechanical part;
performing debinding and sintering on the injection green billet in sequence to obtain a sintered blank; and
performing heat treatment on the sintered blank to obtain the steel mechanical part.

13. The preparation method according to claim 12, wherein D10 of the alloy powder is less than or equal to 4.5 µm, and D90 of the alloy powder is less than or equal to 30 µm.

14. The preparation method according to claim 12, wherein the heat treatment comprises: first performing heat treatment at a temperature of 900°C to 1100°C for 2 h to 3 h, and then performing heat treatment at a temperature of 450°C to 550°C for 3 h to 5 h.

15. The preparation method according to any one of claims 12 to 14, wherein the steel mechanical part comprises components in the following mass percentages: 14% to 20% of nickel, 7.5% to 11% of cobalt, 4% to 7% of molybdenum, 0.05% to 0.5% of rhenium and/or a rare earth element, less than or equal to 0.2% of manganese, less than or equal to 0.2% of silicon, less than or equal to 0.1% of carbon, less than or equal to 0.3% of oxygen, iron, and inevitable impurities.

16. A terminal, wherein the terminal comprises the steel mechanical part according to claim 11, or comprises the steel mechanical part prepared by using the preparation method according to any one of claims 12 to 15.

17. The terminal according to claim 16, wherein the terminal further comprises a flexible display and a folding apparatus configured to carry the flexible display, the folding apparatus is configured to drive the flexible display to deform, and the folding apparatus comprises the steel mechanical part.
